# EUROPÄISCHE PATENTANMELDUNG

(11) **EP 2 581 615 A1**
(43) Veröffentlichungstag der Anmeldung: **17.04.2013**
(21) Anmeldenummer: 11185231.5
(22) Anmeldetag: 14.10.2011
(51) Int. Cl.: F16C 17/03, F16C 23/02

(54) **Kippsegmentradiallager mit einer Ausrichteinrichtung für eine Einwellenströmungsmaschine**

(71) Anmelder: Siemens Aktiengesellschaft, 80333 München (DE)
(72) Erfinder: Brahm, Bernadette, 44879 Bochum (DE); Böckel, Frank, 53773 Hennef (DE); Dettmar, Diethelm, 46485 Wesel (DE); Droschinski, Anna Christina, 45470 Mülheim an der Ruhr (DE); Lüneburg, Bernd, 45481 Mülheim an der Ruhr (DE); Mermertas, Ümit, 45478 Mülheim an der Ruhr (DE); Soggeberg, Jan, 46286 Dorsten (DE); Stränger, Marcel, 45479 Mülheim an der Ruhr (DE); Winkler, Andreas, 47239 Duisburg (DE)

(57) **Zusammenfassung**

Ein Kippsegmentradiallager für eine Einwellenströmungsmaschine weist einen Stützring (2), ein Kippsegment (4) und eine Kippsegmenthalterung (3) mit einer Ausrichteinrichtung (8) auf, die eine fest an der Innenseite des Stützrings (2) befestigte und nach innen gewandte, konvexe Gleitfläche (18) sowie eine fest am außenliegenden Kippsegmentrücken (6) des Kippsegments (4) befestigte und nach außen gewandte, konkave Gleitfläche (19) aufweist, wobei die Gleitflächen (18, 19) aufeinanderliegend angeordnet und jeweils in jedem ihrer Längsschnitte ein Kreisbogen sind sowie die Ausrichteinrichtung (8) eingerichtet ist das Kippsegment (4) in seiner Axialposition relativ zum Stützring (2) einstellbar zu halten, so dass in Abhängigkeit der Axialposition der konkaven Gleitfläche (19) relativ zur Axialposition der konvexen Gleitfläche (18) ein Anstellwinkel der Kippsegmentgleitfläche (5) des Kippsegments (4) relativ zur Achse des Kippsegmentradiallagers (1) einstellbar ist.

## Beschreibung

Die Erfindung betrifft ein Kippsegmentradiallager mit einer Ausrichteinrichtung für eine Einwellenströmungsmaschine.

Eine Strömungsmaschine, wie z.B. eine Einwellenströmungsmaschine, weist einen Rotor mit einer Welle auf. Für eine Lagerung der Welle kommt u.a. ein Kippsegmentradiallager in Frage, in dem die Welle um ihre Achse rotieren kann. Das Kippsegmentradiallager weist in der Regel drei oder vier Kippsegmente auf, wobei zwischen unteren und oberen Kippsegmenten unterschieden wird. Die unteren Kippsegmente tragen die Gewichtskraft der Welle, wohingegen die oberen Kippsegmente in einem Störfall ein Abheben der Welle verhindern. Die Kippsegmente sind in einem Stützring angeordnet, welcher in einem Lagergehäuse eingelegt ist. Die Gewichtskraft wird über die unteren Kippsegmente, den Stützring und das Lagergehäuse in ein Fundament abgeleitet. Für den Betrieb der Maschine ist es erforderlich, dass die Wellenachse und die Maschinenachse aufeinander liegen.

Für eine Ausrichtung der Welle ist die Außenseite der unteren Kippsegmente aus einem derart weichen Material hergestellt, dass sich unter einer Einwirkung der Gewichtskraft das Material plastisch verformen kann, wodurch eine selbständige Anpassung der Wellenachse an die Maschinenachse erfolgen kann. Des Weiteren sind als Ausrichtelemente zwischen dem Stützring und dem Kippsegment Packungen aus dünnen Blechen vorgesehen, die über eine Schrumpfung ihrer Packungen die Anpassung der beiden Achsen ermöglicht. Eine manuelle Ausrichtung der Wellenachse auf die Maschinenachse ist nur möglich, indem das Kippsegmentradiallager vollständig demontiert wird, was sehr aufwändig ist.

Aufgabe der Erfindung ist es, ein Kippsegmentradiallager für eine Einwellenströmungsmaschine zu schaffen, wobei die Ausrichtung der Wellenachse auf die Maschinenachse einfach ist.

Das erfindungsgemäße Kippsegmentradiallager für eine Einwellenströmungsmaschine weist einen Stützring, ein Kippsegment und eine Kippsegmenthalterung mit einer Ausrichteinrichtung auf, die eine fest an der Innenseite des Stützrings befestigte und nach innen gewandte, konvexe Gleitfläche sowie eine fest am außenliegenden Kippsegmentrücken des Kippsegments befestigte und nach außen gewandte, konkave Gleitfläche aufweist, wobei die Gleitflächen aufeinanderliegend angeordnet und jeweils in jedem ihrer Längsschnitte ein Kreisbogen sind sowie die Ausrichteinrichtung eingerichtet ist das Kippsegment in seiner Axialposition relativ zum Stützring einstellbar zu halten, so dass in Abhängigkeit der Axialposition der konkaven Gleitfläche relativ zur Axialposition der konvexen Gleitfläche ein Anstellwinkel der Kippsegmentgleitfläche des Kippsegments relativ zur Achse des Kippsegmentradiallagers einstellbar ist.

Das erfindungsgemäße Kippsegmentradiallager erlaubt eine vorteilhaft einfache Ausrichtung der Wellenachse auf die Maschinenachse. Zur Ausrichtung ist es nicht erforderlich, das Lager vollständig auseinander zu bauen, sondern die unteren Kippsegmente werden lediglich durch ein Anheben der Welle von dessen Gewichtskraft entlastet. Ferner ist es nicht erforderlich, die Außenseite des Kippsegments aus einem weichen Material herzustellen und eine Packung aus dünnen Blechen zwischen dem Stützring und dem Kippsegment anzuordnen.

Die Gleitflächen sind bevorzugt Zylinderflächen, deren Radien gleich groß sind. Des Weiteren fallen die Achsen bevorzugt mit einer Sekante des Stützrings zusammen. Die Ausrichteinrichtung weist bevorzugt einen Gleiter auf, der mit dem Kippsegment an dessen Kippsegmentrücken befestigt ist und die konkave Gleitfläche aufweist. Ferner steht bevorzugt der Gleiter in Umfangsrichtung fest mit dem Kippsegment formschlüssig und in Axialrichtung fest in Eingriff.

Die Ausrichteinrichtung weist bevorzugt ein Rückenteil auf, das mit dem Stützring an dessen Innenseite befestigt ist und die konvexe Gleitfläche aufweist. Ferner weist die Ausrichteinrichtung bevorzugt ein Stützringfundament auf, mit dem das Rückenteil formschlüssig und in Axialrichtung fest in Eingriff steht. Bevorzugt ist der Gleiter mittels einer Einstelleinrichtung in seiner Axialposition festlegbar an dem Stützringfundament abgestützt. Dabei ist die Einstelleinrichtung bevorzugt eine Stellschraube. Des Weiteren weist das Kippsegmentradiallager bevorzugt einen Ölzufuhrkanal für das Kippsegment auf, von dem die Gleitflächen durchdrungen sind.

Im Folgenden wird eine bevorzugte Ausführungsform des erfindungsgemäßen Kippsegmentradiallagers anhand der beigefügten schematischen Zeichnungen erläutert. Es zeigt:
- Figur 1: einen Querschnitt der unteren Hälfte der Ausführungsform des erfindungsgemäßen Kippsegmentradiallagers, in dem zwei baugleiche untere Kippsegmente dargestellt sind, und
- Figur 2: einen Längsschnitt eines der beiden unteren Kippsegmente der Ausführungsform.

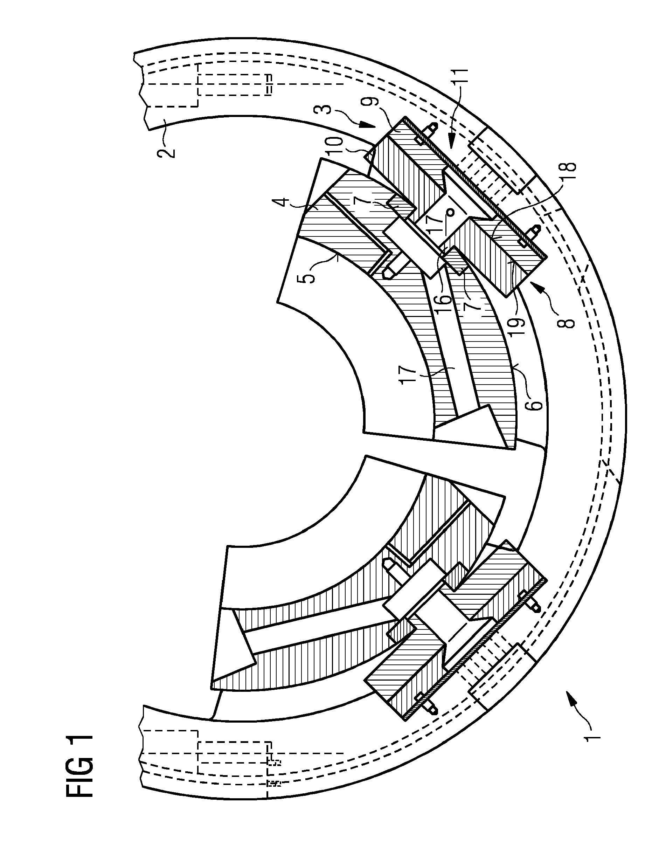

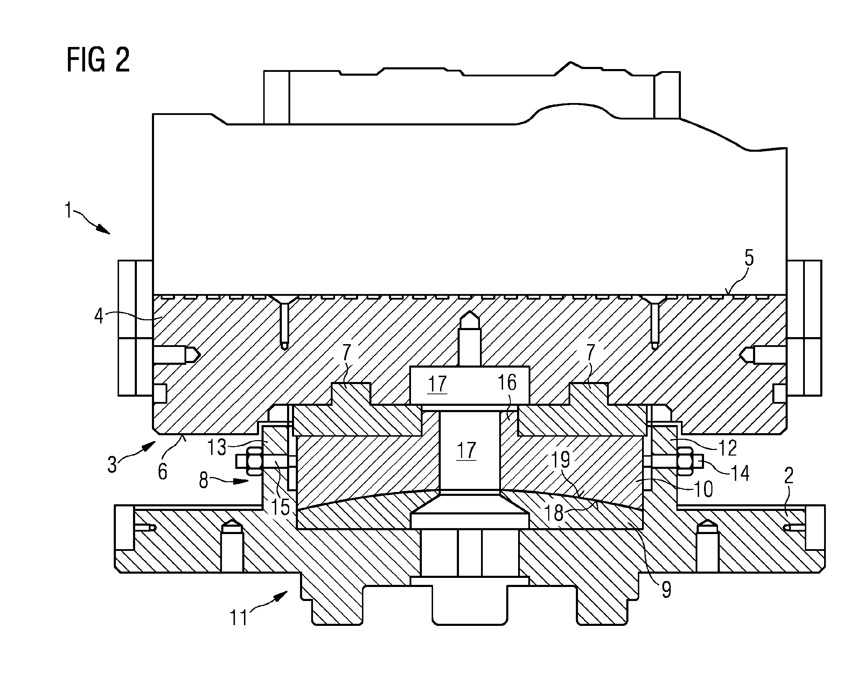

Wie es aus Figur 1 und 2 ersichtlich ist, weist ein Kippsegmentradiallager 1 einen Stützring 2, ein Kippsegment 4 sowie eine Kippsegmenthalterung 3 auf, mit der das Kippsegment 4 an dem Stützring 2 befestigt ist. An der radialen Innseite des Kippsegments 4 befindet sich die Kippsegmentgleitfläche 5, welche eine Zylinderfläche ist, dessen Rotationsachse im Einbauzustand parallel zur Maschinenachse sein soll. Im Einbauzustand liegt eine Welle auf der Kippsegmentgleitfläche 5 auf. Das Kippsegment 4 weist auf der der Kippsegmentgleitfläche 5 abgewandten Seite einen Kippsegmentrücken 6 auf, welcher im Wesentlichen parallel zu der Kippsegmentgleitfläche 5 verläuft. Die Welle ist zwischen den Kippsegmenten 4 angeordnet (engl. "load between pad"), wobei das Kippsegmentradiallager 1 einen Abstützwinkel von 45 ° hat.

Wie es aus Figur 1 und 2 ersichtlich ist, weist die Kippsegmenthalterung 3 eine Ausrichteinrichtung 8 mit einem Rückenteil 9 und einem Gleiter 10 auf. Das Rückenteil 9 ist an der Innenseite des Stützrings 2 angebracht und weist eine radial nach innen gerichtete und in Axialrichtung konvex gekrümmte Gleitfläche 18 auf. Der Gleiter 10 ist an der radialen Außenseite des Kippsegments 4 angeordnet und weist eine radial nach außen gerichtete und in Axialrichtung konkav gekrümmte Gleitfläche 19 auf. Die beiden Gleitflächen 18, 19 sind Zylinderflächen mit gleichen Radien und sind derart aufeinander anliegend angeordnet, dass die Rotationsachsen der konvexen Gleitfläche 18 und der konkaven Gleitfläche 19 aufeinander liegen und mit einer Sekante des Stützrings 2 zusammenfallen.

Wie es aus Figur 1 und 2 ersichtlich ist, ist der Gleiter 10 mit einem Auflagereinsatz 7 an dem Kippsegmentrücken 6 befestigt. Der Gleiter 10 weist an seiner der konkaven Gleitfläche 19 abgewandten Seite einen Mitnehmerzapfen 16 auf, welcher in eine radial außen liegende Aussparung des Auflagereinsatzes 7 greift. Radial innenseitig sind auf zwei verschiedenen axialen Position zwei Zapfen auf dem Auflagereinsatz 7 angeordnet, welche in entsprechende Aussparungen im Kippsegmentrücken 6 greifen. Die radial innen liegende Fläche des Auflagereinsatzes 7, aus der die Zapfen hervorstehen ist eben, während die radial außen liegende Fläche des Auflagereinsatzes 7 derart gekrümmt ist, dass sie parallel zur Kippsegmentgleitfläche 5 ist. Durch die beiden auf verschiedenen Axialposition angebrachten Zapfen des Auflagereinsatzes 7 ist das Kippsegment 4 gegen eine axiale Verschiebung relativ zum Gleiter 10 verhindert. Damit an der Kontaktlinie zwischen dem Kippsegment 4 und dem Gleiter 10 keine plastischen Verformungen auftreten können, ist der Auflagereinsatz 7 aus einem vergüteten Wälzstahl gefertigt.

Wie es aus Figur 1 und 2 ersichtlich ist, ist das Rückenteil 9 in einer in der Innenseite des Stützrings 2 eingebrachten Aussparung eingebracht. Dabei ist die der konvexen Gleitfläche 18 abgewandte Fläche eben. Das Rückenteil wird in Axialrichtung von einem Stützringfundament 11 abgestützt, welches innenseitig von dem Stützring 2 absteht, so dass das Rückenteil 9 gegen eine Verschiebung in Axialrichtung geschützt ist.

Wie es aus Figur 2 ersichtlich ist, sind radial innenseitig, auf dem Stützringfundament 11, auf zwei verschiedenen axialen Positionen eine erste Flanke 12 sowie eine zweite Flanke 13 angeordnet. Die axialen Außenseiten der Flanken 12, 13 verlaufen bündig mit den axialen Außenseiten des Stützringfundaments, während die axialen Innenseiten der Flanken 12, 13 axial nach außen zurückversetzt sind, so dass der Gleiter 10 über dem Rückenteil 9 hervorstehen kann. In die erste Flanke 12 ist eine erste Stellschraube 14 und in die zweite Flanke 13 ist eine zweite Stellschraube 15 eingebracht, welche axial orientiert sind und mit welchen der Gleiter 10 in Axialrichtung variabel feststellbar ist.

Durch diese Anordnung der Kippsegmenthalterung 3, insbesondere durch die Anordnung der Gleitflächen 18, 19, ist es ermöglicht, den Gleiter 10 in Axialrichtung auf dem Rückenteil zu bewegen. Dadurch, dass das Kippsegment in Axialrichtung fest mit dem Gleiter 10 verbunden ist und dadurch, dass das Rückenteil 9 in Axialrichtung fest mit dem Stützring 2 verbunden ist, kann die Rotationsachse der zylinderförmigen Kippsegmentgleitfläche 5 über die axiale Position des Gleiters 10 relativ zum Rückenteil 9 gekippt werden. Dadurch, dass die Welle auf der Kippsegmentgleitfläche 5 aufliegt, kann die Wellenachse an die Maschinenachse angepasst werden.

Ferner ist, wie aus Figur 1 und 2 ersichtlich, der Stützring 2, das Rückenteil 9, der Gleiter 10 und das Kippsegment 4 von einem Ölzufuhrkanal 17 durchdrungen, durch den im Einbauzustand ein Schmieröl in den Dichtspalt zwischen der Kippsegmentgleitfläche 5 und der Welle eingeströmt wird. Der Ölzufuhrkanal 17 durchdringt dabei die radiale Außenfläche des Rückenteils 9 senkrecht in dessen Mitte, verjüngt sich anschließend im Rückenteil, bevor er die konvexe und konkave Gleitflächen 18, 19 in dessen Mitten senkrecht durchdringt. Der Ölzufuhrkanal 17 ist im Bereich der Gleitflächen 18, 19 relativ breit, so dass nach einem Verschieben des Gleiters 10 relativ zum Rückenteil 9 der durchströmbare Querschnitt des Ölzufuhrkanals 17 ausreichend groß ist, um die Kippsegmentgleitfläche 5 mit Öl zu versorgen. Der Ölzufuhrkanal 17 tritt an der radialen Innenseite des Mitnehmerzapfens 16 aus dem Gleiter 10 aus, von wo der Kanal in das Kippsegment 4 eintritt. Von dem Eintritt in das Kippsegment 4 verläuft der Ölzufuhrkanal 17 schräg zur Kippsegmentgleitfläche 5 bis der Ölzufuhrkanal 17 über ein senkrecht zur Kippsegmentgleitfläche 5 ausgeführtes Loch in den Dichtspalt zwischen der Kippsegmentgleitfläche 5 und der Welle mündet.

Zur Vorausrichtung der unteren Kippsegmente 4 wird das Kippsegmentradiallager 1 senkrecht aufgestellt und eine Wellenattrappe wird in das Kippsegmentradiallager 1 eingelegt. Anschließend wird der Rundlauf der Wellenattrappe zum Stützring 2 festgestellt und durch die Ausrichteinrichtung 8 wird die Wellenattrappe zentrisch zum Stützring 2 ausgerichtet. Dazu werden die Stellschrauben 14, 15 so eingestellt, dass die Rotationsachsen der Kippsegmentgleitflächen 5 parallel zur Achse des Stützrings 2 liegen. Kommt es beim Einbau des Stützrings 2 in das Gehäuse der Maschine zu einer Verkippung von der Wellenachse und der Maschinenachse, so kann dies in der Endausrichtung durch die Ausrichteinrichtung 8 ausgeglichen werden. Des Weiteren kann in der Endausrichtung eine seitliche Klaffung durch Anheben eines Kippsegments 4 und gleichzeitiges Absenken des anderen Kippsegments 4 ausgeglichen werden.

## Patentansprüche

1. Kippsegmentradiallager für eine Einwellenströmungsmaschine, mit einem Stützring (2), einem Kippsegment (4) und einer Kippsegmenthalterung (3) mit einer Ausrichteinrichtung (8), die eine fest an der Innenseite des Stützrings (2) befestigte und nach innen gewandte, konvexe Gleitfläche (18) sowie eine fest am außenliegenden Kippsegmentrücken (6) des Kippsegments (4) befestigte und nach außen gewandte, konkave Gleitfläche (19) aufweist,
wobei die Gleitflächen (18, 19) aufeinanderliegend angeordnet und jeweils in jedem ihrer Längsschnitte ein Kreisbogen sind sowie die Ausrichteinrichtung (8) eingerichtet ist das Kippsegment (4) in seiner Axialposition relativ zum Stützring (2) einstellbar zu halten, so dass in Abhängigkeit der Axialposition der konkaven Gleitfläche (19) relativ zur Axialposition der konvexen Gleitfläche (18) ein Anstellwinkel der Kippsegmentgleitfläche (5) des Kippsegments (4) relativ zur Achse des Kippsegmentradiallagers (1) einstellbar ist.

2. Kippsegmentradiallager gemäß Anspruch 1,
wobei die Gleitflächen (18, 19) Zylinderflächen sind, deren Radien gleich groß sind.

3. Kippsegmentradiallager gemäß Anspruch 2,
wobei die Achsen der Zylinderflächen mit einer Sekante des Stützrings (2) zusammenfallen.

4. Kippsegmentradiallager gemäß einem der Ansprüche 1 bis 3,
wobei die Ausrichteinrichtung (8) einen Gleiter (10) aufweist, der mit dem Kippsegment (4) an dessen Kippsegmentrücken (6) befestigt ist und die konkave Gleitfläche (19) aufweist.

5. Kippsegmentradiallager gemäß Anspruch 4,
wobei der Gleiter (10) in Umfangsrichtung fest mit dem Kippsegment (4) formschlüssig und in Axialrichtung fest in Eingriff steht.

6. Kippsegmentradiallager gemäß einem der Ansprüche 1 bis 5,
wobei die Ausrichteinrichtung (8) ein Rückenteil (9) aufweist, das mit dem Stützring (2) an dessen Innenseite befestigt ist und die konvexe Gleitfläche (18) aufweist.

7. Kippsegmentradiallager gemäß Anspruch 6,
wobei die Ausrichteinrichtung (8) ein Stützringfundament (11) aufweist, mit dem das Rückenteil (9) formschlüssig und in Axialrichtung fest in Eingriff steht.

8. Kippsegmentradiallager gemäß Anspruch 7,
wobei der Gleiter (10) mittels einer Einstelleinrichtung (14) in seiner Axialposition festlegbar an dem Stützringfundament (11) abgestützt ist.

9. Kippsegmentradiallager gemäß Anspruch 8,
wobei die Einstelleinrichtung eine Stellschraube (14) ist.

10. Kippsegmentradiallager gemäß einem der Ansprüche 1 bis 9,
wobei das Kippsegmentradiallager (1) einen Ölzufuhrkanal (17) für das Kippsegment (4) aufweist, von dem die Gleitflächen (18, 19) durchdrungen sind.
